# FASCICULE DE BREVET EUROPEEN

(11) **EP 2 962 560 B1**
(45) Date de publication et mention de la délivrance du brevet: **04.01.2017**
(21) Numéro de dépôt: 15173398.7
(22) Date de dépôt: 23.06.2015
(51) Int. Cl.: A01M 29/32

(54) **DISPOSITIF ANTI-PRÉDATION POUR BASSIN PISCICOLE**
RAUBSCHUTZVORRICHTUNG FÜR FISCHZUCHTBECKEN
FISH POND ANTI-PREDATION DEVICE

(30) Priorité: 30.06.2014 FR 1456203
(43) Date de publication de la demande: 06.01.2016
(73) Titulaire: Groupement Ornithologique du Refuge Nord Alsace (GORNA), 67330 Neuwiller les Saverne (FR)
(72) Inventeur: Marchive, Guy, 67270 ALTECKENDORF (FR)
(74) Mandataire: Rhein, Alain

(56) Documents cités:
- WO-A1-93/16590
- CA-A1- 2 221 041
- CN-U- 202 750 577
- US-A1- 2004 083 643

## Description

La présente invention a pour objet un dispositif anti-prédation pour bassin piscicole comportant une pluralité de poteaux destinés à être uniformément répartis autour du bassin et ancrés dans le terrain environnant, lesdits poteaux étant aptes à supporter d'une part une protection horizontale s'étendant au-dessus dudit bassin et comportant une pluralité de monofilaments parallèles tendus sur une armature reliée auxdits poteaux et d'autre part une protection latérale comportant au moins un filet vertical suspendu sur ladite armature autour de la périphérie de la protection horizontale et s'étendant depuis la protection horizontale jusqu'à la surface du sol.

Comme son nom l'indique, un dispositif anti-prédation pour bassin piscicole a pour but d'interdire aux prédateurs piscivores, dont en particulier certains oiseaux, l'accès aux poissons qui y sont élevés, afin d'éviter à la fois tout prélèvement intempestif et tout risque d'infection épizootique pouvant donner lieu à des pertes économiques considérables.

Différents dispositifs anti-prédation pour bassin piscicole sont utilisés à l'heure actuelle.

Il est par exemple connu de protéger les étangs d'élevage en les bordant de fils électriques, ou au moyen de filets ou de grillages affleurant la surface de l'eau et montés sur un châssis relié à la berge environnante.

Afin de permettre à un pisciculteur d'accéder à un bassin protégé pour effectuer les différentes interventions qui s'imposent en cours d'élevage, il a par ailleurs été imaginé de ménager, entre la surface de l'eau et un filet de protection, un espace de hauteur suffisante pour permettre à une personne d'y évoluer aisément. A cet effet, le filet de protection est tendu sur les sommets de poteaux de hauteur appropriée érigés dans et/ou autour du bassin.

La publication WO 93/16590 préconise quant à elle un dispositif anti-prédation comportant une pluralité de mâts, destinés à être solidement ancrés autour de la périphérie d'un bassin de pisciculture, et sur lesquels sont tendus des câbles parallèles espacés entre eux d'une distance apte à empêcher le passage d'un animal, l'ensemble des câbles formant une protection s'étendant à la fois au-dessus et autour dudit bassin.

Les différentes solutions connues du demandeur ne donnent néanmoins pas entière satisfaction à l'heure actuelle.

Ainsi, certaines solutions se révèlent inefficaces car elles comportent, dès leur installation ou suite à une déformation de leur structure, par exemple due à son vieillissement ou aux intempéries, des failles structurelles définissant des passages à travers lesquels les prédateurs peuvent s'introduire puis accéder au bassin.

En outre, de par leur structure et leur aspect difficilement discernable, certains dispositifs anti-prédation constituent des pièges dans lesquels les prédateurs, parmi lesquels des oiseaux appartenant à des espèces protégées, peuvent facilement s'enchevêtrer et se blesser mortellement en essayant de s'en libérer.

La présente invention vise à pallier ces différents inconvénients et propose de fournir un dispositif anti-prédation pour bassin piscicole, dont la fabrication est standardisée de sorte à permettre la maîtrise des coûts, qui soit apte à empêcher durablement toute intrusion intempestive de prédateurs à l'intérieur d'un bassin, quelle que soit sa configuration, tout en prévenant les éventuels préjudices que pourrait subir l'avifaune locale.

Par ailleurs, la présente invention entend également proposer un dispositif anti-prédation pour bassin piscicole facile à entretenir, apte à s'intégrer dans le paysage environnant et à améliorer l'ergonomie du travail.

A cet effet, l'invention a pour objet un dispositif anti-prédation pour bassin piscicole du genre indiqué en préambule, caractérisé en ce qu'il comporte des moyens d'ajustement de l'horizontalité et de la hauteur de ladite armature.

Conformément à une variante de réalisation de l'invention, chaque poteau du présent dispositif anti-prédation pour bassin piscicole est équipé d'une bride de réglage apte à coulisser et à être serrée autour dudit poteau et comportant des moyens pour relier ladite armature audit poteau.

Une telle bride de réglage peut comporter une première pièce sensiblement en forme de «U» dont chacune des deux branches est prolongée par une ailette orientée vers l'extérieur du «U», sensiblement perpendiculairement à ladite branche, et une seconde pièce en forme de «I», lesdites ailettes et chacune des extrémités de la pièce en forme de «I» étant pourvues de moyens aptes à permettre l'assemblage desdites première et seconde pièces pour former ladite bride de réglage et serrer ladite bride de réglage autour d'un poteau.

Dans ce cas, une caractéristique de l'invention est définie par le fait que la bride de réglage comporte au moins trois pattes réparties autour de sa face externe, présentant au moins un passage traversant, une première et une seconde pattes étant coaxiales et s'étendant dans des directions opposées, perpendiculairement à chacune des branches de la pièce en forme de «U», tandis qu'une troisième patte s'étend perpendiculairement à la base de la pièce en forme de «U».

Avantageusement, la bride de réglage du dispositif anti-prédation pour bassin piscicole selon l'invention peut en outre comporter des moyens pour relier des moyens de haubanage à un poteau.

A cet effet, la bride de réglage peut comporter au moins une quatrième patte présentant au moins un passage traversant s'étendant sur sa face externe perpendiculairement à ladite pièce en forme de «I». De préférence, ladite quatrième patte et ladite troisième patte sont coaxiales.

Conformément à une variante de réalisation envisageable, lesdites pattes sont définies par des anneaux.

Selon une autre caractéristique de l'invention, chacune des ailettes de la pièce en forme de «U» et chacune des extrémités de la pièce en forme de «I» comporte au moins un orifice traversant pour le passage de moyens d'assemblage desdites première et seconde pièces pour former ladite bride de réglage et la serrer autour d'un poteau, lesdits moyens d'assemblage pouvant être choisis parmi le groupe comportant des rivets, des vis.

L'invention prévoit encore que ladite bride de réglage est de préférence réalisée en métal, lequel peut être choisi parmi le groupe comprenant l'acier ou l'aluminium.

La présente invention sera mieux comprise à la lecture d'un exemple détaillé de réalisation en référence aux figures 1 à 3 annexées, fournies à titre d'exemple non limitatif, et dans **lesquelles :**
- La figure 1 représente une vue schématique d'un dispositif anti-prédation selon l'invention partiellement équipé d'une protection horizontale et d'une protection verticale, et disposé autour d'un bassin de pisciculture,
- La figure 2 est une vue en perspective d'une variante de réalisation d'une bride de réglage que comporte le dispositif anti-prédation de la figure 1,
- La figure 3 est une vue en perspective éclatée de la bride de réglage de la figure 2.

En référence aux figures, la présente invention concerne un dispositif anti-prédation 1 pour bassin 2 de pisciculture.

Dans la variante de réalisation illustrée, le dispositif anti-prédation 1 est mis en oeuvre pour protéger un bassin 2 de pisciculture, de forme sensiblement carrée, de l'intrusion d'éventuels prédateurs.

Il comporte à cet effet quatre poteaux 3 aptes à supporter à la fois une protection horizontale 4 s'étendant au-dessus du bassin 2 pour le recouvrir et une protection latérale comportant au moins un filet vertical 9, destiné à être suspendu tout autour de la périphérie de la protection horizontale 4 et s'étendant depuis la protection horizontale 4 jusqu'à la surface du sol 5.

Les quatre poteaux 3 sont répartis aux quatre coins du bassin 2. Bien entendu, cette configuration n'est qu'exemplaire et peut être adaptée, ainsi que le nombre de poteaux 3, en fonction de la forme et des dimensions du bassin à protéger.

Les poteaux 3 sont réalisés en tube profilé métallique, par exemple de section carrée, et leur hauteur h est choisie de manière à permettre à un individu de se déplacer aisément dans le bassin 2, sous la protection horizontale 4 en vue de procéder aux différentes interventions requises par l'élevage des poissons.

Les poteaux 3 sont ancrés dans le sol 5 environnant le bassin 2. A cet effet, ils peuvent par exemple être vissés sur des socles (non illustrés) en béton armé au moins partiellement ensevelis.

Afin d'améliorer la stabilité de l'ensemble, dans l'exemple illustré chaque poteau 3 est en outre avantageusement soutenu par deux haubans 6.

Par ailleurs, l'extrémité supérieure des poteaux 3 est de préférence obturée afin d'éviter toute tentative de nichage par certains oiseaux dans leur volume interne, qui pourrait leur être fatale.

Afin de prévenir les risques d'épizooties, l'extrémité supérieure de chaque poteau 3 peut également être équipée de moyens aptes à y empêcher l'atterrissage et le stationnement d'oiseaux, tels que par exemple un faisceau de tiges métalliques (non illustrées) érigées en direction du ciel, ou tout moyen équivalent.

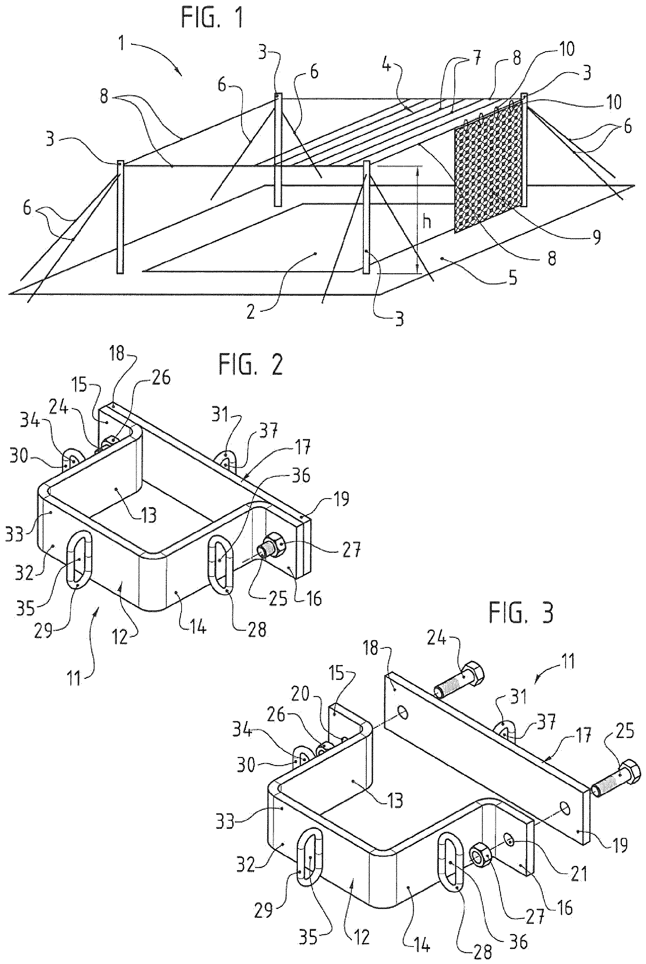

La protection horizontale 4, dont seule une partie est représentée sur la figure 1 pour des raisons de lisibilité, est constituée d'une pluralité de monofilaments 7, parallèles et régulièrement espacés, fabriqués en un matériau apte à résister aux différentes contraintes rencontrées, tel que par exemple le Perlon®, ou tout autre matériau équivalent.

Les monofilaments 7 sont tendus sur une armature comportant au moins quatre câbles porteurs 8, par exemple en acier galvanisé, dont les extrémités de chacun sont respectivement reliées aux extrémités supérieures de deux poteaux 3 au moyen d'une bride de réglage 11 dont chaque poteau 3 est équipé et qui sera décrite plus en détail ci-après. Les monofilaments 7 peuvent être noués sur les câbles porteurs 8 de l'armature ou reliés à ces derniers au moyen de tendeurs.

Une fois en place, les monofilaments 7 formant la protection horizontale 4 génèrent avantageusement une irisation faisant office d'avertisseur visuel facilement repérable par les oiseaux. Ainsi, ces derniers ne risquent pas de s'enchevêtrer malencontreusement dans la protection horizontale 4.

Dans la variante de réalisation décrite, la protection latérale comporte plusieurs filets verticaux 9, dont un seul est illustré à la figure 1 pour des raisons de lisibilité.

Les filets verticaux 9 peuvent par exemple être réalisés en polyéthylène haute densité, traité anti-UV, garantissant leur solidité et leur longévité. Ils sont suspendus sur les câbles porteurs 8, et s'étendent autour de la protection horizontale 4, depuis cette dernière jusqu'à la surface du sol 5. Ils peuvent être lestés au moyen d'une barre (non illustrée) reliée à leur extrémité inférieure, de manière à éviter l'intrusion de prédateurs par le dessous. De manière alternative, leur extrémité inférieure peut également être tendue sur des câbles reliés aux extrémités inférieures des poteaux 3.

Par ailleurs, dans l'exemple de réalisation illustré, les filets verticaux 9 sont reliés aux câbles porteurs 8 au moyen de crochets coulissants 10 permettant, si nécessaire, leur déplacement par rapport auxdits câbles porteurs 8 pour ménager ponctuellement, dans la protection latérale, un passage permettant à un individu d'accéder au bassin 2.

Dans la variante de réalisation illustrée, la bride de réglage 11 est réalisée en métal, tel que par exemple de l'acier ou tout autre matériau équivalent et présente une section sensiblement carrée sensiblement identique à celle d'un poteau 4. Avantageusement, la bride de réglage 11 présente une épaisseur suffisante, par exemple de l'ordre de 8mm lui permettant de résister aux contraintes exercées par les monofilaments 7 tendus sur les câbles porteurs 8.

En référence aux figures 2 et 3, la bride de réglage 11 comporte une première pièce 12 sensiblement en forme de «U» dont chacune des deux branches 13, 14 est prolongée par une ailette 15, 16 orientée vers l'extérieur du «U», perpendiculairement à ladite branche 13, 14. La bride de réglage 11 comporte en outre une seconde pièce 17 en forme de « I ». Les ailettes 15, 16 et chacune des extrémités 18, 19 de la pièce 17 en forme de « I » sont respectivement pourvues d'un orifice traversant 20, 21, 22, 23 pour le passage par exemple de vis 24, 25 aptes à être serrées au moyen de boulons 26, 27. Ceci permet d'assembler lesdites première et seconde pièces 12, 17 en vue de former la bride de réglage 11 puis la serrer autour d'un poteau 3, de sorte à l'immobiliser par rapport à celui-ci à la hauteur souhaitée.

Dans la variante illustrée, la bride de réglage 11 comporte par ailleurs quatre pattes 28, 29, 30, 31, réparties autour de sa face externe 33. Elles sont ici en forme d'anneaux ménageant chacun un passage traversant 34, 35, 36, 37.

En référence aux figures 2 et 3, les première et seconde pattes 28, 30 sont coaxiales et s'étendent dans des directions opposées, perpendiculairement à chacune des branches 13, 14 de la pièce 12 en forme de « U». De même, les troisième et quatrième pattes 29, 31 sont coaxiales et s'étendent dans des directions opposées, perpendiculairement respectivement à la base 32 de la pièce 12 en forme de « U» et à ladite pièce 17 en forme de « I ».

Les pattes 28, 29, 30 permettent d'accrocher une extrémité d'un câble porteur 8 sur la bride de réglage 11 et par conséquent à un poteau 3. De même, la patte 31 permet d'accrocher une extrémité d'un hauban 6 sur la bride de réglage 11 et par conséquent à un poteau 3.

Grâce à la présence des brides de réglage 11, la hauteur et l'horizontalité de l'armature constituée des câbles porteurs 8 peuvent facilement être ajustées, aussi bien lors de l'installation du dispositif anti-prédation 1, qu'ultérieurement.

Il est ainsi possible de parer, si nécessaire, à une éventuelle déformation ou à un affaissement de la structure pouvant conduire à l'apparition de passages par lesquels les prédateurs pourraient s'introduire et accéder au bassin 2.

Il suffit en effet pour cela de régler individuellement la hauteur de chacune des brides de réglage 11 dont les poteaux 3 sont équipés, en desserrant les vis 24, 25, puis en faisant coulisser, vers une direction et sur une distance appropriées, chacune des brides de réglage 11 par rapport au poteau 3 considéré, jusqu'à obtenir l'horizontalité et la hauteur souhaitées de l'armature.

Ainsi, grâce à une telle structure, la protection horizontale 4 et le filet vertical 9, formant la protection latérale, sont toujours parfaitement positionnés pour interdire tout accès au bassin 2.

En outre, le dispositif anti-prédation 1 selon l'invention s'intègre parfaitement au paysage, est respectueux de l'avifaune locale qui ne risque plus de s'y enchevêtrer, et est d'entretien limité.

Par ailleurs, les éléments qui composent le dispositif anti-prédation 1 selon l'invention peuvent être fabriqués de manière industrielle et standardisée ce qui permet d'en limiter les coûts de production.

Bien entendu, de nombreuses modifications peuvent être apportées aux exemples décrits ci-dessus sans sortir du cadre de la présente invention telle que définie par les revendications.

## Revendications

1. Dispositif anti-prédation (1) pour bassin piscicole (2) comportant une pluralité de poteaux (3) destinés à être uniformément répartis autour du bassin (2) et ancrés dans le sol (5) environnant, lesdits poteaux (3) étant aptes à supporter d'une part une protection horizontale (4) s'étendant au-dessus dudit bassin (2) et comportant une pluralité de monofilaments (7) parallèles tendus sur une armature (8) reliée auxdits poteaux (3) et d'autre part une protection latérale comportant au moins un filet vertical (9) suspendu sur ladite armature (8) autour de la périphérie de la protection horizontale (4) et s'étendant depuis la protection horizontale (4) jusqu'à la surface du sol (5), **caractérisé en ce qu'**il comporte des moyens d'ajustement de l'horizontalité et de la hauteur de ladite armature (8)

2. Dispositif anti-prédation (1) pour bassin piscicole (2) selon la revendication 1, **caractérisé en ce que** chacun desdits poteaux (3) est équipé d'une bride de réglage (11) apte à coulisser et à être serrée autour dudit poteau (3) et comportant des moyens pour relier ladite armature audit poteau (3).

3. Dispositif anti-prédation (1) pour bassin piscicole (2) selon la revendication 2, **caractérisé en ce que** ladite bride de réglage (11) comporte une première pièce (12) sensiblement en forme de « U » dont chacune des deux branches (13, 14) est prolongée par une ailette (15, 16) orientée vers l'extérieur du «U », sensiblement perpendiculairement à ladite branche (13, 14), et une seconde pièce (17) en forme de « I », lesdites ailettes ((15, 16) et chacune des extrémités (18, 19) de la pièce (17) en forme de « I » étant pourvues de moyens aptes à permettre l'assemblage desdites première et seconde pièces (12, 17) pour former ladite bride de réglage (11) et serrer ladite bride de réglage (11) autour d'un poteau (3).

4. Dispositif anti-prédation (1) pour bassin piscicole (2) selon la revendication 3, **caractérisé en ce que** ladite bride de réglage (11) comporte au moins trois pattes (28, 29, 30) réparties autour de sa face externe (33) et présentant chacune au moins un passage traversant (34, 35, 36), une première et une seconde pattes (28, 30) étant coaxiales et s'étendant dans des directions opposées, perpendiculairement à chacune des branches (13, 14) de la pièce (12) en forme de « U », tandis qu'une troisième patte (29) s'étend perpendiculairement à la base (32) de la pièce (12) en forme de « U ».

5. Dispositif anti-prédation (1) pour bassin piscicole (2) selon l'une quelconque des revendications 2 à 4, **caractérisé en ce que** la bride de réglage (11) comporte des moyens pour relier des moyens de haubanage (6) à un poteau (3).

6. Dispositif anti-prédation (1) pour bassin piscicole (2) selon la revendication 5, **caractérisé en ce que** ladite bride de réglage (11) comporte au moins une quatrième patte (31) présentant au moins un passage traversant (37) et s'étendant sur sa face externe perpendiculairement à ladite pièce (17) en forme de « I ».

7. Dispositif anti-prédation pour bassin piscicole selon la revendication 6, **caractérisé en ce que** lesdites troisième et quatrième pattes sont coaxiales.

8. Dispositif anti-prédation (1) pour bassin piscicole (2) selon l'une quelconque des revendications 4 ou 6, **caractérisé en ce que** lesdites pattes (28, 29, 30, 31) sont définies par des anneaux.

9. Dispositif anti-prédation (1) pour bassin piscicole (2) selon l'une quelconque des revendications 3 à 8, **caractérisé en ce que** chacune des ailettes (15, 16) de la pièce (12) en forme de « U » et chacune des extrémités (18, 19) de la pièce (17) en forme de « I » comporte au moins un orifice traversant (20, 21, 22, 23) pour le passage de moyens d'assemblage desdites première et seconde pièces (12, 17) pour former ladite bride de réglage (11) et la serrer autour d'un poteau (3).

10. Dispositif anti-prédation (1) pour bassin piscicole (2) selon la revendication 9, **caractérisé en ce que** lesdits moyens d'assemblage sont choisis parmi le groupe comportant des rivets, des vis.

11. Dispositif anti-prédation (1) pour bassin piscicole (2) selon l'une quelconque des revendications précédentes, **caractérisé en ce que** ladite bride de réglage (11) est réalisé en métal.

12. Dispositif anti-prédation (1) pour bassin piscicole (2) selon la revendication 11, **caractérisé en ce que** ledit métal est choisi parmi le groupe comprenant l'acier, l'aluminium.

## Patentansprüche

1. Raubschutzvorrichtung (1) für Fischzuchtbecken (2), umfassend eine Vielzahl von Pfosten (3), die bestimmt sind, gleichmäßig um das Becken (2) verteilt zu sein und im umgebenden Boden (5) verankert sind, wobei die Pfosten (3) imstande sind, zum einen einen horizontalen Schutz (4), der sich über dem Becken (2) erstreckt und eine Vielzahl von parallelen Monofilamenten (7) aufweist, die über ein Gerüst (8) gespannt sind, das mit den Pfosten (3) verbunden ist, und zum anderen eine seitlichen Schutz, der mindestens ein vertikales Netz (9), aufgehängt an dem Gerüst (8) um die Peripherie des horizontalen Schutzes (4), aufweist und das sich von dem horizontalen Schutz (4) bis zur Oberfläche des Bodens (5) erstreckt, zu tragen, **dadurch gekennzeichnet, dass** sie Justierungsmittel der Horizontalität und der Höhe des Gerüsts (8) aufweist.

2. Raubschutzvorrichtung (1) für Fischzuchtbecken (2) nach Anspruch 1, **dadurch gekennzeichnet, dass** jeder der Pfosten (3) mit einem Regulierflansch (11) ausgestattet ist, der imstande ist, zu gleiten und um den Pfosten (3) gespannt zu sein und Mittel aufweist, um das Gestell mit dem Pfosten (3) zu verbinden.

3. Raubschutzvorrichtung (1) für Fischzuchtbecken (2) nach Anspruch 2, **dadurch gekennzeichnet, dass** der Regulierflansch (11) ein erstes Teil (12) etwa in "U"-Form, von dem jeder der zwei Schenkel (13, 14) mittels eines Flügels (15, 16) verlängert ist, der etwa senkrecht zu dem Schenkel (13, 14) nach außerhalb des "U" zeigt, und ein zweites Teil (17) in "I"-Form umfasst, wobei die Flügel (15, 16) und jedes der Enden (18, 19) des Teils (17) in "I"-Form mit Mitteln ausgestattet sind, die imstande sind, die Verbindung des ersten und zweiten Teils (12, 17) zu erlauben, um den Regulierflansch (11) zu bilden und den Regulierflansch (11) um einen Pfosten (3) zu spannen.

4. Raubschutzvorrichtung (1) für Fischzuchtbecken (2) nach Anspruch 3, **dadurch gekennzeichnet, dass** der Regulierflansch (11) mindestens drei Ösen (28, 29, 30) aufweist, die um seine Außenfläche (33) verteilt sind und jede mindestens eine Durchgangsöffnung (34, 35, 36) aufweist, wobei eine erste und eine zweite Öse (28, 30) koaxial sind und sich in entgegengesetzen Richtungen senkrecht zu jedem der Schenkel (13, 14) des Teils (12) in "U"-Form erstrecken, wogegen sich eine dritte Öse (29) senkrecht zur Basis (32) des Teils (12) in "U"-Form erstreckt.

5. Raubschutzvorrichtung (1) für Fischzuchtbecken (2) nach einem der Ansprüche 2 bis 4, **dadurch gekennzeichnet, dass** der Regulierflansch (11) Mittel zum Verbinden der Verankerungsmittel (6) mit einem Pfosten (3) aufweist.

6. Raubschutzvorrichtung (1) für Fischzuchtbecken (2) nach Anspruch 5, **dadurch gekennzeichnet, dass** der Regulierflansch (11) mindestens eine vierte Öse (31) aufweist, die mindestens eine Durchgangsöffnung (37) aufweist und sich auf seiner Außenfläche senkrecht zum Teil (17) in "I"-Form erstreckt.

7. Raubschutzvorrichtung für Fischzuchtbecken nach Anspruch 6, **dadurch gekennzeichnet, dass** die dritte und vierte Öse koaxial sind.

8. Raubschutzvorrichtung (1) für Fischzuchtbecken (2) nach einem der Ansprüche 4 oder 6, **dadurch gekennzeichnet, dass** die Ösen (28, 29, 30, 31) durch Ringe definiert sind.

9. Raubschutzvorrichtung (1) für Fischzuchtbecken (2) nach einem der Ansprüche 3 bis 8, **dadurch gekennzeichnet, dass** jeder der Flügel (15, 16) des Teils (12) in "U"-Form und jedes der Enden (18, 19) des Teils (17) in "I"-Form mindestens eine Durchgangsöffnung (20, 21, 22, 23) für den Durchgang von Verbindungsmitteln des ersten und zweiten Teils (12, 17) aufweist, um den Regulierflansch (11) zu bilden und ihn um einen Pfosten (3) zu spannen.

10. Raubschutzvorrichtung (1) für Fischzuchtbecken (2) nach Anspruch 9, **dadurch gekennzeichnet, dass** die Verbindungsmittel aus der Gruppe ausgewählt sind, die Niete, Schrauben umfasst.

11. Raubschutzvorrichtung (1) für Fischzuchtbecken (2) nach einem der vorangehenden Ansprüche, **dadurch gekennzeichnet**, der Regulierflansch (11) aus Metall hergestellt ist.

12. Raubschutzvorrichtung (1) für Fischzuchtbecken (2) nach Anspruch 11, **dadurch gekennzeichnet, dass** das Metall aus der Gruppe ausgewählt ist, die den Stahl, das Aluminium umfasst.

## Claims

1. An anti-predation device (1) for a fish pond (2) having a plurality of posts (3) to be distributed uniformly around the basin (2) and anchored in the surrounding ground (5), said posts (3) being able to bear, on the one hand, a horizontal protection (4) extending above said basin (2) and having a plurality of parallel monofilaments (7) tensioned on a frame (8) connected to said posts (3) and, on the other hand, a lateral protection including at least one vertical net (9) suspended on said frame (8) around the periphery of the horizontal protection (4) and extending from the horizontal protection (4) to the surface of the ground (5), **characterized in that** it includes means for adjusting the horizontality and the height of said frame (8).

2. The anti-predation device (1) for a fish pond (2) according to claim 1, **characterized in that** each of said posts (3) is equipped with an adjusting flange (11) able to slide and to be tightened around said post (3) and including means for connecting said frame to said post (3).

3. The anti-predation device (1) for a fish pond (2) according to claim 2, **characterized in that** said adjusting flange (11) includes a first substantially U-shaped part (12) whereof each of the two branches (13, 14) is extended by a fin (15, 16) oriented toward the outside of the "U", substantially perpendicular to said branch (13, 14), and a second I-shaped part (17), said fins (15, 16) and each of the ends (18, 19) of the I-shaped part (17) being provided with means able to allow the assembly of said first and second parts (12, 17) to form said adjusting flange (11) and tighten said adjusting flange (11) around a post (3).

4. The anti-predation device (1) for a fish pond (2) according to claim 3, **characterized in that** said adjusting flange (11) includes at least three tabs (28, 29, 30) distributed around its outer face (33) and each having at least one through passage (34, 35, 36), first and second tabs (28, 30) being coaxial and extending in opposite directions, perpendicular to each of the branches (13, 14) of the U-shaped part (12), while a third tab (29) extends perpendicular to the base (32) of the U-shaped part (12).

5. The anti-predation device (1) for a fish pond (2) according to any one of claims 2 to 4, **characterized in that** the adjusting flange (11) includes means for connecting guying means (6) to a post (3).

6. The anti-predation device (1) for a fish pond (2) according to claim 5, **characterized in that** said adjusting flange (11) includes at least one fourth tab (31) having at least one through passage (37) and extending over its outer face perpendicular to said I-shaped part (17).

7. The anti-predation device for a fish pond according to claim 6, characterize din that said third and fourth tabs are coaxial.

8. The anti-predation device (1) for a fish pond (2) according to any one of claims 4 or 6, **characterized in that** said tabs (28, 29, 30, 31) are defined by rings.

9. The anti-predation device (1) for a fish pond (2) according to any one of claims 3 to 8, **characterized in that** each of the fins (15, 16) of the U-shaped part (12) and each of the ends (18, 19) of the I-shaped part (17) includes at least one through orifice (20, 21, 22, 23) for the passage of assembly means for said first and second parts (12, 17) to form said adjusting flange (11) and tighten it around a post (3).

10. The anti-predation device (1) for a fish pond (2) according to claim 9, **characterized in that** said assembly means are chosen from among the group including rivets, screws.

11. The anti-predation device (1) for a fish pond (2) according to any one of the preceding claims, **characterized in that** said adjusting flange (11) is made from metal.

12. The anti-predation device (1) for a fish pond (2) according to claim 11, **characterized in that** said metal is chosen from the group comprising steel, aluminum.
